(19) Europäisches Patentamt

European Patent Office

Office européen des brevets

(11) EP 0 641 748 B1

(12) **EUROPÄISCHE PATENTSCHRIFT**

(45) Veröffentlichungstag und Bekanntmachung des Hinweises auf die Patenterteilung:
**16.06.1999 Patentblatt 1999/24**

(21) Anmeldenummer: 93114219.4

(22) Anmeldetag: 04.09.1993

(51) Int. Cl.$^6$: **C04B 28/26**, C09K 17/00
// (C04B28/26, 14:06, 14:10, 14:30, 24:04, 24:42, 40:00)

(54) **Masse für die Befestigung von Dübeln u.dgl. in Hohlräumen von Beton, Stein und Ziegelmauerwerk, auf Basis Wasserglas, und Verfahren zur Herstellung der Masse**

A water glass based mass for fixing plugs etc. in concrete, stone or masonry holes, and method of producing this mass

Masse à base de verre soluble pour la fixation des boulons d'ancrage etc. dans des trous de béton, pierre ou maçonnerie et méthode pour la production de cette masse

(84) Benannte Vertragsstaaten:
DE FR GB NL

(43) Veröffentlichungstag der Anmeldung:
08.03.1995 Patentblatt 1995/10

(73) Patentinhaber: **Schanze, Rudolf**
**D-41379 Brüggen (DE)**

(72) Erfinder: **Schanze, Rudolf**
**D-41379 Brüggen (DE)**

(74) Vertreter:
**Büchel, Kurt F., Dr. et al**
**Patentbüro Büchel & Partner AG**
**Letzanaweg 25-27**
**9495 Triesen (LI)**

(56) Entgegenhaltungen:
**EP-A- 0 082 971        EP-A- 0 137 887**
**EP-A- 0 324 968        EP-A- 0 455 582**

- **DATABASE WPI Week 9143, Derwent Publications Ltd., London, GB; AN 91-313527 & JP-A-03 207 784 (IJICHI SHOJI KK) 11. September 1991**
- **PATENT ABSTRACTS OF JAPAN vol. 01, no. 0172 (C-354)18. Juni 1986 & JP-A-61 023 683 (SEKISUI KAGAKU KOGYO KK) 1. Februar 1986**
- **DATABASE WPI Week 9318, Derwent Publications Ltd., London, GB; AN 93-149431 & JP-A-05 086 370 (NIPPON CHEM. IND. CO. LTD.) 6. April 1993**

## Beschreibung

Die Erfindung betrifft eine Messe für die Befestigung von Dübeln, Gewindestangen und dergleichen in Hohlräumen, insbesondere Bohrlöchern, in Beton, Stein und Ziegelmauerwerk, auf Basis Wasserglas, nach dem Oberbegriff des Anspruchs 1. Eine solche Masse ist beispielsweise in der DE-A1-32 46 602 und der DE-A1-40 09 998 für die Herstellung von Formkörpern beschrieben, die bei 50 - 200° C gehärtet werden oder Verbindungen enthalten müssen, die bei Reaktion mit dem Wasserglas eine Wärmetönung abgeben.

EP-A-455 582 beschreibt ebenfalls eine Masse auf Wasserglasbasis, die zur Befestigung von Dübeln geeignet ist. Als "Beschleuniger" offenbart EP-A-455 582 allerdings den Zusatz einer anorganischen oder metallorganischen Verbindung, die beim Kontakt mit Wasser eine starke Wärmetönung zeigt und auf diese Weise eine Beschleunigung der Härtung der Mischung aus Wasserglas und Alkalioxid bewirkt. Ein Härter im Sinne der vorliegenden Erfindung wird nicht erwähnt.

JP3207784 (Derwent-Abstract No.91-313527) beschreibt Wasserglasmassen zur Herstellung von formbaren Materialien und hitzebeständigen Klebstoffen und Beschichtungen, die vor der Anwendung 20 Minuten bis 3 Stunden lang geknetet werden und innerhalb von 1 bis 48 Stunden bei Raumtemperatur aushärten. Es ist allerdings nicht erkennbar, ob diese Massen als Dübelmassen geeignet und auch bei Temperaturen unter dem Gefrierpunkt einsetzbar sind.

JP5086370 (Derwent AN 93-149431) beschreibt Wasserglasmassen zur Bodenverdichtung, worin das Wasserglas ein molares Verhältnis von $SiO_2$ zu Alkalioxid von 5 bis 20 und die Endmischung Wassergehalte von mehr als 50 Gew.% aufweist. Es erscheint ziemlich unwahrscheinlich, dass sich die Massen zur Befestigung von Dübeln eignen könnten.

Nun wird jedoch für das Verankern von Befestigungsteilen in Betonhohlräumen auf Baustellen eine ganze Reihe von Anforderungen gestellt, die bisherige Massen nicht erfüllen konnten. So soll ein Arbeiten auch über Kopf möglich sein, ohne dass die noch nicht gehärtete Masse wieder herunterfliesst; die Aushärtezeit sollte steuerbar sein: die Masse sollte bei Raumtemperatur in 5 - 10 min erstarren und in 15 - 60 min grünfest sein, d.h. 70 - 80 % der nach 3 - 24 h erreichten Endfestigkeit besitzen; sie sollte zwischen -10°C und +40°C verarbeitbar sein, weniger als 1% Schwund aufweisen, aber auch im wesentlichen druckfrei aushärten und wenigstens bis 500°C, vorzugsweise bis 800°C temperaturbeständig sein; sie sollte gut säure- (saurer Regen!) und laugen- (Beton!) -beständig sein; die Druckfestigkeit sollte wenigstens 80 $N/mm^2$, die Auszugfestigkeit wenigstens 40 $N/mm^2$, die Haft- und die Biegefestigkeit je wenigstens 10 $N/mm^2$ betragen; bei alledem sollte die Verarbeitungsviskosität möglichst gering sein, um auch enge Hohlräume leicht und vollständig ausfüllen zu können. Diesen Anforderungen können bisher vorgeschlagene Massen auf Basis Wasserglas in keiner Weise genügen. Die Erfindung hat sich daher die Aufgabe gestellt, herkömmliche Massen auf Basis Wasserglas in Richtung der Erfüllung der genannten Anforderungen zu verbessern. Dies gelingt in einzelnen Punkten durch die in den Ansprüchen beschriebenen Einzelmassnahmen, in Summe nur durch die Kombination aller Massnahmen.

Heute wird das Verhältnis Kieselsäure zu Alkalioxid im Wasserglas als Quotient der Molverhältnisse in der angegebenen Reihenfolge definiert. Das übliche Wasserglas, z.B. Kaliwasserglas, mit einem Quotienten von 2 - 4 hat daher auf 2 - 4 Mol (= 120 - 140 g) $SiO_2$ nur 1 Mol $K_2O$ (94 g), ist also in Bezug auf das Alkalioxid unterstöchiometrisch. In der eingangs genannten DE-A1-32 46 602 werden auf 1 Gewichtsteil $SiO_2$ z.B. 0,7 - 2,5 Gewichtsteile $K_2O$ vorgeschlagen; das entspricht einem Quotienten von 0,4 - 1,4; dabei werden Werte in diesem weiten Bereich als gleichwertig betrachtet. Dabei wurde aber übersehen, dass ein zu geringer Quotient einen zu grossen Gehalt an Alkalioxid bedeutet.

Erfindungsgemäss wurde hingegen festgestellt, dass zu grosse Alkalimengen für das angestrebte Ziel ebenso unerwünscht sind wie zu kleine und daher vermieden werden sollten. Es leidet darunter nämlich einerseits die Wasserfestigkeit, andererseits die Feuerfestigkeit der daraus hergestellten Formkörper. Herkömmliche Wasserglasquotienten von 2 - 4 bieten andererseits viel zu wenig Alkali, als dass beim Härtungsvorgang das $SiO_2$ feinkörnig ausgefällt werden könnte, so dass keine hohen Festigkeiten entstehen.

Durch die Wahl der richtigen Molverhältnisse zwischen Kieselsäure und Alkali wird bereits ein bedeutender Schritt in die Richtung der erwähnten Anforderungen gemacht. Erfindungsgemäss wird ein Molverhältnis von $SiO_2$ zu Alkalioxid von > 1,4, vorzugsweise 1,45 - 1,60, jedoch < 2 gewählt. Die Aushärtung bei Raumtemperatur, oder sogar in einem Verarbeitungsbereich von -10°C bis +40°C, die für die Anwendung auf Baustellen erforderlich ist, kann nur durch den Einsatz von Härtern erzielt werden (nicht zu verwechseln mit dem in der Literatur für bestimmte Massezusammensetzungen oft fälschlich als "Härter" bezeichneten Wasserglas selbst). Die erfindungsgemässe Masse enthält daher ausserdem bestimmte Mengen einer, unter Abspaltung einer gegenüber Kieselsäure geringfügig stärkeren Säure, das Alkali des Wasserglases neutralisierenden Verbindung. Als solche, als Härter wirkende Verbindungen, haben sich Salze oder Ester bewährt, die unter der stark alkalischen Wirkung des Wasserglases eine stärkere Säure als die Kieselsäure abspalten und unter Bildung deren Alkalisalzes feindisperse Kieselsäure ausfällen, die zu einer hohen Festigkeit führt. Je mehr Alkali im Gitter sitzt, und je geringer die Differenz in der Stärke der verwendeten Säure zur Kieselsäure ist, desto feiner dispers fällt die Kieselsäure aus; der Alkalimenge sind jedoch, wie bereits eingangs erwähnt, aus anderen Gründen Grenzen gesetzt.

Die erfindungsgemässe Masse auf Wasserglasbasis ist somit im wesentlichen dadurch gekennzeichnet, dass die Wasserglaskomponente ein Molverhältnis von $SiO_2$ zu Alkalioxid von >1,4, vorzugsweise 1,45 - 1,60, jedoch < 2 aufweist, und dass die Masse ausserdem, auf 100 Gewichtsteile Wasserglas bezogen, 10-40, vorzugsweise 20-30 Gewichtsteile einer unter Abspaltung einer gegenüber Kieselsäure - vorzugsweise nur geringfügig - stärkeren saure das Alkali des Wasserglases neutralisierenden Verbindung enthält.

Geeignete Härter sind z.B. organische Karbonate (Kohlensäure ist schon eine stärkere Säure als die Kieselsäure), die bisher nur für die Herstellung von Fasern vorgeschlagen worden waren (JP-A1-3112828). Für die Verarbeitung der erfindungsgemässen Masse auf der Baustelle ist aber die Einstellbarkeit der Topfzeit je nach Aussentemperatur und Anwendungsart bedeutsam, die sich mit organischen Karbonaten oder anderen Estern besonders variabel gestalten lässt. Grundsätzlich auch verwendbar, aber erfindungsgemäss nicht bevorzugt, sind das schon bisher verwendete Natriumsilicofluorid oder Aluminiumphosphat, aber auch viele Acetate; sie wirken zu rasch; auf das giftige Natriumsilicofluorid wollte man ausserdem ohnedies lieber verzichten. Im Rahmen der vorliegenden Erfindung bevorzugt verwendete Härter sind niedrige Alkylenkarbonate, wie z.B. Ethylen-, Propylen- und/oder Butylenkarbonat, insbesondere Propylenkarbonate (4-Methyl-1,3-dioxolan-2-on).

Gemäss einer besonders bevorzugten Ausführungsform der erfindungsgemässen Masse enthält diese ausser den oben angegebenen Substanzen zusätzlich, auf 100 Gewichtsteile Füllstoff bezogen, 10 bis 30, vorzugsweise 15 bis 20 Gewichtsteile eines Schmier- oder Gleitmittels. Diesem kommt insofern, eine besondere Bedeutung bei der Verarbeitung zu, als dadurch nämlich beispielsweise das Herausdrücken der Masse aus einer Kartusche erleichtert wird.

Bisher verwendete Glykole oder Tenside (die auch eine Verflüssigung, bzw. Viskositätserniedrigung begünstigen), sind nachteilig, weil sie die Wasserfestigkeit der Fertigmischung beeinträchtigen. Als besonders zweckmässig hat sich hingegen der Zusatz von feindispersem Titandioxid erwiesen, möglicherweise infolge der im stark alkalischen Milieu gebildeten Titanate.

Schliesslich - wie erwähnt - ist für die Verarbeitung auf der Baustelle auch eine niedrige Viskosität zweckmässig, die durch ein geeignetes Verflüssigungsmittel erzielt wird (wobei man auf Wasser verzichtet, weil dies die Härtung und den Schwund nachteilig beeinflusst), sich aber beim Arbeiten über Kopf, bzw. beim Befüllen nach unten offener Hohlräume negativ bemerkbar macht. Diesem Umstand muss man daher, um die beiden gegensätzlichen Forderungen zu erfüllen, durch Zusatz eines Thixotropiemittels abhelfen. Man setzt daher dem Produkt einerseits einen Verflüssiger zu, insbesondere ein Silan (Silikonemulsionen sind weniger vorteilhaft; sie trocknen schlecht und verringern die Haftfestigkeit), andererseits ein Thixotropiemittel, insbesondere einen alkalisch aktivierten Bentonit. Dieser bewirkt trotz des Gehalts an Verflüssiger, dass auch ein an die Wand geworfener Batzen aus der Fertigmischung an der Wand hängen bleibt. Ausserdem bewirkt der Verflüssiger, dass das Verhältnis Wasserglas zu Füllstoff verringert, z.B. bei 1 : 1,5 bis 1 : 2 gehalten werden kann; durch den höheren Füllgrad ergeben sich ebenfalls ein geringerer Schwund und eine höhere Festigkeit.

Gemäss einer besonders vorteilhaften Ausführungsform enthält daher die erfindungsgemässe Masse, bezogen auf 100 Gewichtsteile Wasserglas, etwa 20 - 40, vorzugsweise etwa 30 - 35 Gewichtsteile eines vorzugsweise anorganischen Thixotropiemittels, sowie etwa 10 - 40, vorzugsweise etwa 20 - 30 Gewichtsteile eines Verflüssigers.

Als Thixotropiemittel hat sich Bentonit, vorzugsweise alkalisch aktivierter Bentonit, als besonders günstig erwiesen, beispielsweise das unter der Bezeichnung OPTIGEL[R]CK der Firma Süd-Chemie AG, München, hergestellte hochthixotrope Geliermittel, ein weisses, freifliessendes Pulver.

Als Verflüssiger wird vorzugsweise eine unter der Bezeichnung WS 431 von Degussa vertriebene Silan-Emulsion verwendet. Diese wirkt während des Verarbeitungsprozesses als Verflüssiger und im Endprodukt als Verfestiger.

Die in der erfindungsgemässen Masse eingesetzten feinkörnigen, hochaktiven Reaktionspartner ($SiO_2$ und/oder $Al_2O_3$) sind zweckmässig die Produkte ZS-203 ($Al_2O_3$) der Firma Martinswerk GmbH, Bergheim, bzw. Elkem 940 ($SiO_2$) der Firma Elkem GmbH, Düsseldorf.

Das erfindungsgemäss verwendete Wasserglas ist vorzugsweise reines Kaliwasserglas. Dieses ergibt im Vergleich zu Natronwasserglas bzw. zu Kombinationen von Kali- und Natronwasserglas eine bessere Verflüssigung. Das Molverhältnis von $SiO_2$ zu Alkalioxid beträgt, wie gesagt, vorzugsweise 1,45 - 1,60, beispielsweise 1,47.

Als Füllstoff wird zweckmässig Quarz, u.zw. ein Gemisch von Quarzsand der Korngrösse 0,4 mm und Quarzmehl (insbesondere Quarzmehl W6) verwendet, insbesondere im Mengenverhältnis von etwa 7:5 bis 7:1, und in einer Gesamtmenge von etwa 25 - 40, insbesondere 30 - 36 Gewichtsteilen. Es hat sich gezeigt, dass der bisher üblicherweise verwendete Quarzsand von z.B. 0,1 - 0,25 mm von zu kleiner Korngrösse ist und eher zum Schwinden neigt, während grössere Körner von 0,4 mm sich besser verkeilen und damit auch die Auszugfestigkeit erhöhen. Noch grössere Körnungen sind aber wiederum nicht mehr so gut, weil sie gegebenenfalls schon fast dem Abstand zwischen Dübel oder Gewindestange einerseits und der Bohrlochinnenwand andererseits entsprechen.

In der folgenden Tabelle 1 ist das Beispiel 1 für eine erfindungsgemässe Masse angegeben:

| Pos. | Gew.% | Material u. Bezeichnung | Funktion |
|---|---|---|---|
| 1 | 10.7 | $Al_2O_3$ ZS203 (Martinswerk GmbH) | hochaktiver Reaktionspartner |
| 2 | 10.7 | $SiO_2$ Elkem 940 | hochaktiver Reaktionspartner |
| 3 | 21.4 | Wasserglas, $SiO_2$:$K_2O$ = 1,47 | Binder |
| 4 | 5.3 | $TiO_2$ (Rutil-Type) | Gleitmittel |
| 5 | 30.0 | Quarzsand 0,4 mm | Füllstoff |
| 6 | 4.3 | Quarzmehl Millisil W6 | Füllstoff |
| 7 | 4.8 | Propylenkarbonat | Härter (Alkali neutralisierende Verbindung) |
| 8 | 7.5 | Bentonit (OPTIGEL[(R)]CK, Süd-Chemie) | Thixotropiemittel |
| 9 | 5.3 | Silan-Emulsion WS 431, Degussa | Verflüssiger |
| | 100.0 | | |

Die erfindungsgemässe Masse kann wie folgt hergestellt werden: Der flüssige Binder (z.B. Wasserglas Pos. 3) wird, gegebenenfalls zusammen mit dem Verflüssiger (z.B. Silan-Emulsion WS 431, Pos. 9) vorgelegt. Die hochaktiven Reaktionspartner (z.B. $Al_2O_3$ und $SiO_2$, Pos. 1 und 2) werden unter Rühren zugegeben, und zwar zusammen mit dem Thixotropiemittel (z.B. Bentonit Pos.8) und dem Gleitmittel (z.B. $TiO_2$, Pos.4). Hierauf werden die Füllstoffe (z.B. Quarzsand und Quarzmehl, Pos.5 und 6) unter Rühren zugegeben. Anschliessend wird der Härter (z.B. Propylenkarbonat, Pos.7) bei hoher Drehzahl eingearbeitet. Die Herstellung erfolgt bei Raumtemperatur. Je nach eingesetztem hochaktivem Reaktionspartner (Typ und Menge) kann im System aufgrund der exothermen Reaktion auch ohne den Zusatz spezieller, eine Wärmetönung hervorrufender metallorganischer Verbindungen, wie z.B. in der eingangs erwähnten DE-A1-40 09 998 vorgeschlagen, eine Temperaturerhöhung entstehen, die maximal 40-50°C beträgt.

Die erfindungsgemässen Massen zeichnen sich durch die folgenden Produkteigenschaften vorteilhaft aus: sie haben einen minimalen Schwund (<0,5 %), bilden keine Risse und schüsseln nicht, sind temperaturbeständig bis 900°C, nicht brennbar, wasser- und säurefest, sowie laugenbeständig.

Diese Eigenschaften werden durch die erfindungsgemässen Massnahmen der Verwendung eines Wasserglases mit einem Molverhältnis von $SiO_2$ zu Alkalioxid von mehr als 1,4 und weniger als 2, vorzugsweise von 1,45 - 1,60, und Verwendung bestimmter Mengen einer unter Abspaltung einer gegenüber Kieselsäure geringfügig stärkeren und das Alkali des Wasserglases neutralisierenden Verbindung erreicht. Die gemäss einer bevorzugten Ausführungsform der Erfindung vorgeschlagene, gleichzeitige Verwendung eines Thixotropiemittels (z.B. Bentonit) und eines Verflüssigers (z.B. Silan-Emulsion) trägt ebenfalls zur Erzielung der obigen Eigenschaften bei, wirkt sich aber insbesondere vorteilhaft bei der Verarbeitung aus, insbesondere beim Arbeiten über Kopf.

In den folgenden Tabellen 2 und 3 werden weitere erfindungsgemässe Mischungen und die mit ihnen erzielten Topfzeiten bzw. Festigkeiten angeführt:

Tabelle 2

| Rohstoffe | Beispiele | | | |
|---|---|---|---|---|
| | 2 | 3 | 4 | 5 |
| $Al_2O_3$ (ZS203) | 10,2 | 9,8 | 9,6 | 9,8 |
| $SiO_2$ (Silica Fume) | 10,2 | 9,8 | 9,6 | 9,8 |
| Wasserglas (Natrium-Kalium-) | 20,5 | 19,7 | 19,2 | 19,6 |
| Quarzsand (Körnung 0.4 mm) | 34,9 | 33,2 | 32,7 | 33,4 |
| Quarzmehl (Millisil W6) | | 13,8 | 13,5 | 13,7 |
| Quarzfeinstmehl Sikron SF 300 | 8,2 | 7,9 | 7,7 | 7,8 |
| Quarzmehl (Millisil W6 EST) | 14,3 | | | |

Tabelle 2 (fortgesetzt)

| Rohstoffe | Beispiele | | | |
|---|---|---|---|---|
| | 2 | 3 | 4 | 5 |
| Titandioxid (Rutil-Type) | 1,2 | 1,2 | 1,2 | 1,2 |
| Silan-Emulsion (WS 405) | 0,5 | 0,6 | | |
| Silan-Emulsion (WS 431) | | | 1,9 | 0,8 |
| Propylencarbonat flüssig | | 0,8 | | |
| Estergemisch Silactin flüssig | | 0,8 | | |
| Alu-Phosphat Fabutit 320 | | 2,4 | 4,6 | 3,9 |
| Topfzeit min | 60 | 35 | 30 | 35 |
| Grünfestigkeit min | 150 | 90 | 90 | 90 |
| Endfestigkeit nach h | >72 | 48 | 60 | 48 |
| Auszugswerte KN | 30 | 45 | 40 | 40 |

Tabelle 3

| Rohstoffe | Beispiele | | | | | | | | |
|---|---|---|---|---|---|---|---|---|---|
| | 6 | 7 | 8 | 9 | 10 | 11 | 12 | 13 | 14 |
| $Al_2O_3$ (ZS203) | 12,6 | 12,6 | 12,7 | 12,0 | 12,1 | 11,5 | 11,5 | 10,7 | 10,5 |
| $SiO_2$ (Silica Fume) | 12,6 | 12,6 | 12,7 | 12,0 | 12,1 | 11,5 | 11,5 | 10,7 | 10,5 |
| Wasserglas (Kali-, 1,47) | 25,3 | 25,1 | 25,4 | 23,9 | 24,3 | 23,1 | 23,1 | 21,4 | 20,9 |
| Quarzsand Körnung 0,4 mm | 35,3 | 35,0 | 35,5 | 33,4 | 34,0 | 32,4 | 32,5 | 30,0 | 29,4 |
| Quarzmehl (Millisil W6) | 5,1 | 5,1 | 5,1 | 4,8 | 4,9 | 4,6 | 4,6 | 4,3 | |
| Titandioxid (Rutil-Type) | 1,5 | 1,5 | 1,5 | 1,4 | 1,5 | 2,8 | 4,6 | 5,3 | 9,4 |
| Bentonite (Optigel CK) | | | 1,0 | | | 3,5 | 5,8 | 7,5 | 7,3 |
| Bentonite (Optigel WX) | | 0,5 | | 1,0 | 2,4 | | | | |
| Silan-Emulsion (WS 431) | 1,0 | 1,0 | | | | 4,4 | 4,6 | 5,3 | 5,2 |
| Propylencarbonat flüssig | 1,5 | 1,5 | | | 8,7 | 6,2 | 1,8 | 4,8 | 4,7 |
| Estergemisch (Silactin Pulver 50%) | | | | 11,5 | | | | | |
| Alu-Phosphat (Fabutit 748) | | | | | | | | | 2,1 |
| Alu-Phosphat (Fabutit 320) | 5,1 | 5,1 | 6,1 | | | | | | |
| Topfzeit min | 25 | 25 | 15 | 20 | 25 | 30 | 45 | 35 | 30 |
| Grünfestigkeit min | 60 | 60 | 60 | 50 | 45 | 90 | 90 | 80 | 80 |
| Endfestigkeit nach h | 42 | 42 | 24 | 30 | 30 | 40 | 40 | 36 | 36 |
| Auszugswerte KN | 40 | 40 | >50 | >40 | >50 | <40 | 30 | >40 | 30 |

Quarzsand und Quarzmehle stammen von der Firma Quarzwerke Frechen; die Bentonite von der Süd-Chemie AG, München; das Aluminiumoxid vom Martinswerk, Bergheim; das Wasserglas von Henkel, Düsseldorf; die Silan-Emulsionen von Degussa, Frankfurt; die Kieselsäure von Elkem GmbH, Düsseldorf; die Aluminiumphosphate von der Chemischen Fabrik Budenheim.

**Patentansprüche**

1. Masse für die Befestigung von Dübeln, Gewindestangen und dergleichen in Hohlräumen, insbesondere Bohrlöchern, in Beton, Stein und Ziegelmauerwerk, auf Basis Wasserglas, mit wenigstens einem feinkörnigen, hochaktiven Reaktionspartner, wie beispielsweise $SiO_2$ und/oder $Al_2O_3$, insbesondere aus Abfallstoffen, sowie mit Füllstoffen, wie beispielsweise Quarzmehl und/oder Quarzsand, dadurch gekennzeichnet, dass das Wasserglas, insbesondere Kaliwasserglas, ein Molverhältnis von $SiO_2$ zu Alkalioxid von >1,4, vorzugsweise 1,45 - 1,60, jedoch jedenfalls <2 aufweist, und dass die Masse ausserdem, auf 100 Gewichtsteile Wasserglas bezogen, 10-40, vorzugsweise 20-30 Gewichtsteile eines Härters enthält, der unter Abspaltung einer gegenüber der Kieselsäure stärkeren Säure das Alkali des Wasserglases neutralisiert.

2. Masse nach Anspruch 1, dadurch gekennzeichnet, dass die Säure Kohlensäure, bzw. die das Alkali des Wasserglases neutralisierende Verbindung insbesondere Äthylen-, Propylen- und/oder Butylenkarbonat ist.

3. Masse nach Anspruch 1 oder 2, dadurch gekennzeichnet, dass sie ausserdem, auf 100 Gewichtsteile Wasserglas bezogen, etwa 20-40, vorzugsweise etwa 30-35 Gewichtsteile eines - vorzugsweise anorganischen - Thixotropiemittels, sowie etwa 10-40, vorzugsweise etwa 20-30 Gewichtsteile eines Verflüssigers, insbesondere einer Silanemulsion, enthält.

4. Masse nach Anspruch 3, dadurch gekennzeichnet, dass das Thixotropiemittel ein mittels Alkali aktivierter Bentonit ist.

5. Masse nach einem der vorhergehenden Ansprüche, dadurch gekennzeichnet, dass sie ausserdem, auf 100 Gewichtsteile Füllstoff bezogen, etwa 10-30, vorzugsweise etwa 15-20 Gewichtsteile eines Schmiermittels, insbesondere feinst disperses $TiO_2$ enthält.

6. Masse nach einem der vorhergehenden Ansprüche, dadurch gekennzeichnet, dass der Füllstoff aus einer Mischung von Quarzsand, vorzugsweise der Korngrösse 0,4 mm, und Quarzmehl besteht, insbesondere in einem Verhältnis von 7 : 5 bis 7 : 1, bei Verwendung von reinem Kaliwasserglas vorzugsweise etwa 7 : 1, bei Verwendung von Natrium-Kalium-Wasserglas vorzugsweise etwa 7 : 5.

7. Masse nach einem der vorhergehenden Ansprüche, dadurch gekennzeichnet, dass sie nach Aushärtung mindestens eine der folgenden Eigenschaften aufweist: sie hat einen Schwund von weniger als 0,5 %, bildet keine Risse, schüsselt nicht, ist temperaturbeständig bis 900°C, nicht brennbar, wasserfest, säurefest, laugenbeständig.

8. Verfahren zur Herstellung einer Masse nach einem der Ansprüche 1 bis 7, dadurch gekennzeichnet, dass man das Wasserglas, gegebenenfalls zusammen mit einem Verflüssiger, vorlegt, dass man hochaktive Reaktionspartner, insbesondere $SiO_2$ und/oder $Al_2O_3$, zusammen mit einem Thixotropiemittel und einem Gleitmittel zugibt, dann, ebenfalls unter Rühren, die Füllstoffe zusetzt und anschliessend den Härter einarbeitet.

9. Verfahren gemäss Anspruch 8, dadurch gekennzeichnet, dass als Verflüssiger eine Silan-Emulsion, als Thixotropiemittel Bentonit, als Gleitmittel $TiO_2$, als Füllstoff Quarzsand und/oder Quarzmehl, als Härter Äthylen-, Propylen- und/oder Butylenkarbonat eingesetzt und der Härter bei hoher Drehzahl eingearbeitet wird.

10. Verfahren nach Anspruch 8 oder 9, worin die Masse bei Raumtemperatur hergestellt wird und/oder nach dem Zusatz des Härters in einem Verarbeitungsbereich von -10°C bis +40°C aushärtet.

11. Verwendung einer Masse gemäss einem der Ansprüche 1 bis 7 oder herstellbar nach einem der Ansprüche 8 bis 10, zur Verankerung von Befestigungsteilen, insbesondere in Beton, Stein oder Ziegelmauerwerk, gegebenenfalls in einem Verarbeitungsbereich von -10°C bis +40°C.

**Claims**

1. Waterglass-based material for fixing plugs, threaded rods and the like in cavities, in particular drilled holes, in concrete, stone and masonry, having at least one fine-particled, highly active reactant, such as, for example, $SiO_2$ and/or $Al_2O_3$, in particular comprising waste materials, and having fillers, such as, for example, quartz powder and/or quartz sand, characterized in that the waterglass, in particular potassium waterglass, has a molar ratio of $SiO_2$ to alkali metal oxide of >1.4, preferably 1.45 - 1.60, but in any case <2, and that the material furthermore contains 10-40, preferably 20-30, parts by weight, based on 100 parts by weight of waterglass, of a hardener which neutralizes the alkali of the waterglass with elimination of an acid stronger than the silicic acid.

2. Material according to Claim 1, characterized in that the acid is carbonic acid or the compound neutralizing the alkali of the waterglass, in particular ethylene carbonate, propylene carbonate and/or butylene carbonate.

3. Material according to Claim 1 or 2, characterized in that it furthermore contains, based on 100 parts by weight of waterglass about 20-40, preferably about 30-35, parts by weight of a - preferably inorganic - thixotropic agent and about 10-40, preferably about 20-30, parts by weight of a liquefier, in particular a silane emulsion.

4. Material according to Claim 3, characterized in that the thixotropic agent is a bentonite activated by means of alkali.

5. Material according to any of the preceding Claims, characterized in that it furthermore contains about 10-30, preferably about 15-20, parts by weight, based on 100 parts by weight of filler, of a lubricant, in particular very highly disperse $TiO_2$.

6. Material according to any of the preceding Claims, characterized in that the filler consists of a mixture of quartz sand, preferably having a particle size of 0.4 mm, and quartz powder, in particular in a ratio of 7:5 to 7:1, preferably about 7:1 when pure potassium waterglass is used and preferably about 7:5 when sodium potassium waterglass is used.

7. Material according to any of the preceding Claims, characterized in that, after hardening, it has at least one of the following properties: it has a shrinkage of less than 0.5%, forms no cracks, does not form a bow-shaped depression and is heat-resistant up to 900°C, nonflammable, water-resistant, acid-resistant and alkali-resistant.

8. Process for the preparation of a material according to any of Claims 1 to 7, characterized in that the waterglass is initially taken, optionally together with a liquefier, and that highly active reactants, in particular $SiO_2$ and/or $Al_2O_3$, are added together with a thixotropic agent and a lubricant, then the fillers are added, also with stirring, and then the hardener is incorporated.

9. Process according to Claim 8, characterized in that the liquefier used is a silane emulsion, the thixotropic agent used is bentonite, the lubricant used is $TiO_2$, the filler used is quartz sand and/or quartz powder and the hardener used is ethylene carbonate, propylene carbonate and/or butylene carbonate, and the hardener is incorporated at high rotational speed.

10. Process according to Claim 8 or 9, in which the material is prepared at room temperature and/or hardened after the addition of the hardener in a processing range from -10°C to +40°C.

11. Use of a material according to any of Claims 1 to 7 or preparable according to any of Claims 8 to 10 for anchoring fixing parts, in particular in concrete, stone or masonry, optionally in a processing range from -10°C to +40°C.

## Revendications

1. Masse pour la fixation de chevilles, tiges filetées et analogues dans des espaces creux, en particulier des trous de perçage, dans du béton, de la pierre, et de la maçonnerie, à base de verre soluble, avec au moins un partenaire de réaction fortement actif, à granulométrie fine, telle que, par exemple, $SiO_2$ et/ou $Al_2O_3$, en particulier constitué de déchets, ainsi qu'avec des charges telles que par exemple, de la poudre de quartz et/ou du sable de quarts, caractérisée en ce que le verre soluble, en particulier du verre soluble au potassium présente un rapport molaire de $SiO_2$ par rapport à l'oxyde alcalin > 1,4, de préférence de 1,45-1,60, cependant en tout cas < 2, et en ce que la masse, en outre, rapportée à 100 parties en poids de verre soluble, contient 10-40, de préférence 20-30 parties en poids d'un durcissant qui neutralise l'alcali du verre soluble, en cassant un acide plus fort que l'acide silicique.

2. Masse selon la revendication 1, caractérisée en ce que l'acide est de l'anhydride carbonique, ou bien la combinaison neutralisant l'alcali du verre soluble, en particulier du carbonate d'éthylène, de polypropylène et/ou de butylène.

3. Masse selon la revendication 1 ou 2, caractérisée en ce qu'elle contient en outre, rapporté à 100 parties en poids de verre soluble, environ 20-40, de préférence environ 30-35 parties en poids d'un agent thixotropique - de préférence non-organique - ainsi qu'environ 10-40, de préférence environ 20-30 parties en poids d'un fluidifiant, en particulier une émulsion de silane.

4. Masse selon la revendication 3, caractérisée en ce que l'agent thixotropique est une bentonite activée au moyen d'alcali.

5. Masse selon l'une des revendications précédentes, caractérisée en ce qu'en outre elle contient rapportée à 100 parties en poids de charge, environ 10-30, de préférence environ 15-20 parties en poids d'un lubrifiant, en particulier du $TiO_2$ finement dispersé.

6. Masse selon l'une des revendications précédentes, caractérisée en ce que la charge est constituée d'un mélange de sable de quartz, de préférence d'une taille de grain de 0,4 mm, et de poudre de quartz, en particulier avec un rapport de 7 : 5 à 7 : 1, en cas d'utilisation de verre soluble au potassium pur de préférence d'environ 7 : 1, en cas d'utilisation de verre soluble au potassium-sodium de préférence d'environ 7 : 5.

7. Masse selon l'une des revendications précédentes, caractérisée en ce qu'elle présente après durcissement au moins l'une des propriétés suivantes : elle a un retrait inférieur à 0,5 %, elle ne forme pas de fissures, elle n'éclate pas, résiste à des températures allant jusqu'à 900°C, n'est pas combustible, résiste à l'eau, résiste aux acides, résiste aux lessives alcalines.

8. Procédé de fabrication d'une masse selon l'une des revendications 1 à 7, caractérisé en ce que l'on met en présence le verre soluble, le cas échéant conjointement avec un fluidifiant, en ce qu'on ajoute un partenaire de réaction fortement actif, en particulier $SiO_2$ et/ou $Al_2O_3$, conjointement avec agent thixotropique et un agent lubrifiant, puis, également en agitant, on ajoute les charges et on introduit ensuite le durcissant.

9. Procédé selon la revendication 8, caractérisé en ce qu'on utilise comme le fluidifiant une émulsion de silane, comme agent thixothropique de la bentonite, comme agent lubrifiant $TiO_2$, comme charge du sable de quartz et/ou de la poudre de quartz, comme durcissant du carbonate d'éthylène de propylène et/ou de butylène, et on introduit le durcissant à une vitesse de rotation élevée.

10. Procédé selon la revendication 8 ou 9, dans lequel la masse est fabriquée à la température ambiante et/ou, après addition du durcisseur, est durcie dans une plage de travail allant de -10 à +40°C.

11. Utilisation d'une masse selon l'une des revendications 1 à 7, ou pouvant être fabriquée selon l'une des revendications 8 à 10 pour assurer l'ancrage de pièces de fixation, en particulier dans du béton, de la pierre ou de la maçonnerie, le cas échéant dans une plage de travail allant de -10°C à +40°C.